# EUROPÄISCHE PATENTSCHRIFT

(11) **EP 1 045 807 B1**
(45) Veröffentlichungstag und Bekanntmachung des Hinweises auf die Patenterteilung: **03.04.2002**
(21) Anmeldenummer: 98958766.2
(22) Anmeldetag: 17.12.1998
(51) Int. Cl.: B65G 21/22, B65H 29/00, E01B 25/10, E01B 25/26

(54) **FÖRDERSYSTEM**
CONVEYOR SYSTEM
SYSTEME CONVOYEUR

(30) Priorität: 29.12.1997 CH 297897
(43) Veröffentlichungstag der Anmeldung: 25.10.2000
(73) Patentinhaber: IPT Weinfelden AG, 8570 Weinfelden (CH)
(72) Erfinder: EBERLE, Jürg, CH-8340 Hinwil (CH)
(74) Vertreter: Frei, Alexandra Sarah
(86) Internationale Anmeldenummer: CH9800543
(87) Internationale Veröffentlichungsnummer: WO9933720

(56) Entgegenhaltungen:
- CH-A- 623 283
- CH-A- 667 636
- DE-A- 4 014 069
- DE-A- 19 604 999
- US-A- 3 999 730
- US-A- 5 129 506

## Beschreibung

Die Erfindung liegt auf dem Gebiete der Fördertechnik und betrifft ein Fördersystem nach dem Oberbegriff des unabhängigen Patentanspruchs. Das Fördersystem dient zur Förderung von Fördergut entlang einer Förderstrecke und weist eine sich entlang der Förderstrecke erstreckende Führung und mindestens ein Förderorgan auf, das von der Führung geführt und durch einen geeigneten Antrieb angetrieben mit oder ohne Fördergut entlang der Förderstrecke bewegbar ist. Dabei sind die Führung und das mindestens eine Förderorgan derart ausgebildet, dass die Bewegung des Förderorgans und die Förderung des Fördergutes im wesentlichen unabhängig sind von der Schwerkraft, das heisst, dass die Förderstrecke derart ausgebildet sein kann, dass Förderorgan und Fördergut an verschiedenen Stellen der Förderstrecke verschiedene räumliche Lagen einnehmen können.

Fördersysteme mit einer Führung und mit mindestens einem, entlang der Führung bewegbaren Förderorgan, für welche Fördersysteme die Lage des Förderorgans und des Fördergutes relativ zur Schwerkraft an verschiedenen Stellen der Förderstrecke verschieden sein kann, sind beispielsweise bekannt in Form von Förderketten, die in Führungskanälen laufen und die aus den Kanälen ragende Greifer tragen, mit deren Hilfe Gegenstände (Fördergut) ergriffen und während der Förderung gehalten werden. Derartige Systeme sind insbesondere bekannt zum Fördern von Strömen von Druckprodukten über im wesentlichen beliebig verlaufende Förderstrecken.

Es sind auch ähnliche Systeme bekannt, bei denen aber als Förderorgan nicht eine aus einer Mehrzahl von Gliedern bestehende Transportkette zur Anwendung kommt sondern eine Mehrzahl von voneinander unabhängigen Förderorganen, die individuell angetrieben werden. Es sind auch Systeme bekannt, die Merkmale der beiden oben genannten Systeme verbinden und deren Förderorgane wahlweise zu Ketten miteinander verbunden sind oder nicht, oder deren Förderorgane zwar miteinander verbunden sind, aber einen beschränkt frei wählbaren Abstand voneinander haben.

Damit die Förderstrecken derartiger Fördersysteme im wesentlichen unabhängig von der Schwerkraft verlaufen können, sind die Führungen beispielsweise derart ausgestaltet, dass sie einen geführten Teil des Förderorgans käfigartig oder kanalförmig umgreifen (Innenläufer) oder dass die Führung vom Förderorgan oder einem Teil davon umgriffen (Aussenläufer) werden. Ferner sind die Förderorgane zum Ergreifen und Halten des Fördergutes ausgestaltet, beispielsweise als Greifer.

Fördersysteme, mit deren Hilfe Fördergut, insbesondere Druckprodukte, im wesentlichen unabhängig von der Schwerkraft auf im wesentlichen beliebigen Förderstrecken gefördert werden, sind beispielsweise beschrieben in den folgenden Publikationen: CH-623283 (F086), CH-592562 (F070), EP-387318 (F270).

Die Führungen von Fördersystemen, wie sie oben beschrieben sind, sind üblicherweise entlang einer durch die Förderfunktion vorgegebenen Förderstrecke fest montiert. Für eine einfache Montage von Führungen entlang von gekurvten Förderstreckenbereichen sind auch biegbare Führungen beschrieben worden, beispielsweise in den Patentanmeldungen CH-2917/96 (F444) und CH-801/97 (F453) oder in der Publikation EP-0628109 (Richter).

Um ein Ende einer Förderstrecke mit fest montierter Führung wahlweise an eine weitere Förderstrecke aus einer Mehrzahl von möglichen weiteren Förderstrecken oder an eine andere Einrichtung aus einer möglichen Mehrzahl anderer Einrichtungen anzuschliessen, kommen üblicherweise Weichen zur Anwendung. Diese bestehen beispielsweise aus einem an einen fest montierten Führungsteil schwenkbar anschliessenden Führungsstück mit einer beschränkten Länge, welches Führungsstück derart verschwenkbar ist, dass sein vom fest montierten Führungsteil wegweisendes, distales Ende je nach Schwenkstellung an eine der weiteren Förderstrecken oder an eine der anderen Einrichtungen anschliesst.

Durch derartige Weichen ist die Anordnung und Ausstattung der durch die Weichen mit der Förderstrecke verbindbaren Anschlüsse in engen Grenzen bestimmt. Die Anschlüsse müssen vom Ende des fest montierten Führungsteils einen durch die Länge des verschwenkbaren Führungsteils definierten Abstand aufweisen, sie müssen alle in der Schwenkebene des schwenkbaren Führungsteils liegen und sie müssen alle derart ausgestaltet sein, dass sie Förderorgane und/oder Fördergut in derselben durch die Förderstrecke und die Weiche definierten Lage übernehmen können. Dasselbe gilt auch für die Weiche gemäss CH-558285 (F61), für die anstelle eines verschwenkbaren Führungsstücks ein biegbares Führungsstück vorgesehen ist.

Wahlweiser Anschluss eines Fördersystems wie oben beschrieben an einen von nur zwei Anschlüssen wird in den meisten Fällen realisiert durch eine fest montierte Führungs-Verzweigungsstelle und ein steuerbares Weichenelement (z.B Klappe in einer Kanalverzweigung) mit zwei Positionen, wobei das Weichenelement in jeder der zwei Positionen eine Bewegung eines Förderorgans auf die eine der von der Verzweigungsstelle abzweigenden zwei Führungsarme zwingt.

Die Erfindung stellt sich nun die Aufgabe, ein Fördersystem mit entlang einer Förderstrecke verlaufender Führung und mit mindestens einem Förderorgan zu schaffen, welches Fördersystem wahlweise anschliessbar ist an einen aus einer Mehrzahl von Anschlüssen. Das erfindungsgemässe Fördersystem soll dabei die Anforderungen an die räumliche Lage der Anschlüsse und an die räumliche Lage des Fördergutes im Anschlussbereich in einem bedeutend geringeren Masse einschränken als dies bekannte Fördersysteme tun. Unter dem Begriff Anschluss sollen dabei Bereiche verstanden werden, in denen entweder das mindestens eine Förderorgan (beispielsweise zusammen mit dem Fördergut) von der Führung des betrachteten Fördersystems an eine weitere Führung übergeht (Anschluss an ein weiters, gleiches Fördersystem) oder in denen das Fördergut von dem mindestens einen Förderorgan des betrachteten Fördersystems abgegeben wird (Anschluss an ein weiteres, anderes oder gleiches Fördersystem oder an eine andere Einrichtung durch Übergabe des Fördergutes).

Die gestellte Aufgabe wird gelöst durch das Fördersystem wie es in den Patentansprüchen definiert ist.

Das erfindungsgemässe Fördersystem weist an einen unveränderbaren Förderstreckenbereich mit fest montierter Führung anschliessend einen variablen Förderstreckenbereich auf, in dem die Führung reversibel bieg- und verdrehbar und durch gezielte Biegung und/oder Verdrehung wahlweise an einen Anschluss aus einer Mehrzahl von Anschlüssen anschliessbar ist. Der variable Förderstreckenbereich ist beispielsweise ein Endbereich der Förderstrecke. Der bieg- und verdrehbare Führungsteil wird durch ein antreibbares Anschliessmittel, das beispielsweise am distalen Ende des bieg- und verdrehbaren Führungsteils angreift, zum Anschliessen an einen spezifischen Anschluss gezielt gebogen und/oder verdreht und in der gezielt gebogenen und/oder verdrehten Position gehalten.

Wie noch zu zeigen sein wird, braucht der variable Förderstreckenbereich nicht zwingend ein Endbereich der Förderstrecke zu sein. Es kann auch ein mittlerer Bereich der Förderstrecke eine bieg- und verdrehbare Führung aufweisen und dadurch als Anschlussbereich funktionieren.

Die Biegbarkeit und Verdrehbarkeit der Führung im variablen Förderstrekkenbereich ist derart auf das mindestens eine Förderorgan abzustimmen, dass durch Biegung und/oder Verdrehung entstehende Kurven in der Förderstrecke einen Krümmungsradius aufweisen, der mindestens so gross ist wie der minimale Krümmungsradius einer Förderstreckenbiegung, die von dem mindestens einen Fördermittel noch problemlos durchlaufen werden kann.

Die Länge des reversibel bieg- und verdrehbaren Führungsstückes im variablen Förderstreckenbereich ist vorteilhafterweise derart auf die mechanische Stabilität der Führung abgestimmt, dass die Form dieses Führungsstückes durch seine Verbindung mit mindestens einer festen Führung und durch die Wirkung des Anschliessmittels eindeutig bestimmt ist und (vorteilhafterweise ohne weitere Hilfsmittel) eine für den Betrieb genügende Formstabilität aufweist, das heisst selbsttragend ist.

Dank der Biegbarkeit der Führung in einem Förderstrecken-Endbereich kann das Ende der Förderstrecke wahlweise an weiter oder weniger weit von einem fest montierten Bereich der Führung entfernten, beliebig im Raume angeordneten Anschlüssen angekoppelt werden, wobei der Endbereich für einen spezifischen Anschluss weniger oder mehr und in verschiedenen Richtungen gebogen oder auch in eine Schlaufe oder in Schlaufen gelegt wird. Dank der Verdrehbarkeit der Führung in einem Förderstrecken-Endbereich kann die räumliche Lage des Förderorgans und damit des Fördergutes an die spezifischen Anforderungen jedes einzelnen Anschlusses flexibel angepasst werden.

Das Prinzip und beispielhafte Ausführungsformen des erfindungsgemässen Fördersystems werden im Zusammenhang mit den folgenden Figuren mehr im Detail beschrieben. Dabei zeigen:
- **Figur 1**: eine beispielhafte Ausführungsform des erfindungsgemässen Fördersystems, dessen variabler Förderstrecken-Endbereich wahlweise an eine Mehrzahl gleicher Fördersysteme anschliessbar ist;
- **Figur 2**: eine weitere, beispielhafte Ausführungsform des erfindungsgemässen Fördersystems, dessen variabler Förderstrecken-Endbereich wahlweise an eine Mehrzahl von anderen oder gleichen Fördersystemen oder an andere Einrichtungen anschliessbar ist (Fördergut-Übergabe);
- **Figuren 3 bis 7**: beispielhafte Ausführungsformen von bieg- und verdrehbaren Führungen für erfindungsgemässe Fördersysteme;
- **Figur 8**: eine weitere beispielhafte Ausführungsform des erfindungsgemässen Fördersystems, die nicht einen variablen Förderstrecken-Endbereich sondern einen variablen Förderstrecken-Mittelbereich aufweist;
- **Figur 9**: eine weitere beispielhafte Ausführungsform des erfindungsgemässen Fördersystems mit zwei variablen Förderstrecken-Endbereichen.

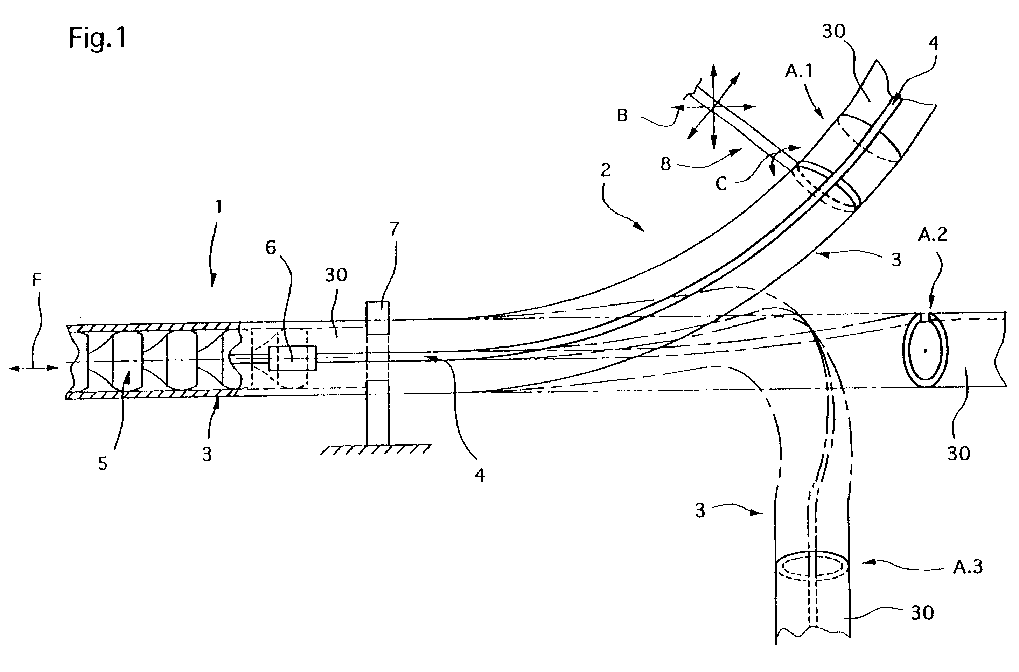

**Figur 1** zeigt sehr schematisch eine erste, beispielhafte Ausführungsform des erfindungsgemässen Fördersystems. In dieser Ausführungsform sind Anschlüsse an weitere gleiche Fördersysteme vorgesehen, derart, dass das mindestens eine Förderorgan über einen Anschlussbereich bewegbar ist und jenseits des Anschlusses von der Führung eines gleichen Fördersystems weiter geführt wird. Es ist von dem erfindungsgemässen Fördersystem nur ein Ende eines unveränderbaren Förderstreckenbereichs 1 mit fest montierter Führung und ein daran anschliessender, variabler Förderstrecken-Endbereich 2 mit reversibel bieg- und verdrehbarer Führung, die wahlweise an drei verschiedene Anschlüsse A.1 bis A.3 anschliessbar ist, dargestellt.

Die Führung 3 besteht im wesentlichen aus einem mindestens im Förderstrecken-Endbereich 2 reversibel bieg- und verdrehbaren Führungskanal 30 (z.B. Führungsschlauch), der einen durchgehenden Längsschlitz 4 aufweist. Das Förderorgan besteht aus einer auf Zug und Druck belastbaren Kette 5, die mindestens ein aus dem Längsschlitz 4 ragendes Greiforgan 6 zum Ergreifen eines Fördergutes aufweist. Zum Fördern wird die Kette 5 durch einen nicht dargestellten, geeigneten Antrieb in der entsprechenden Richtung (Doppelpfeil F) angetrieben.

Im unveränderbaren Förderstreckenbereich 1 kann der Führungskanal 30 (oder allgemein die Führung 3) an sich ebenfalls bieg- und verdrehbar sein oder auch nicht. Das Merkmal dieses Bereiches 1 besteht darin, dass der Führungskanal 30 derart fest montiert ist, dass der Verlauf der Förderstrecke und die räumliche Ausrichtung des Längsschlitzes 4 in diesem Bereich fixiert, das heisst, zu jeder Zeit gleich ist. Dies ist in der Figur 1 durch eine Bride 7 angedeutet, die den Führungskanal 30 fest mit einem Grund verbindet.

Als Anschlüsse A.1 bis A.3 sind offene Enden von gleichen Führungskanälen 30 mit Längsschlitzen 4 vorgesehen. Wie aus der Figur 1 zu entnehmen ist, ist die räumliche Position dieser Kanalenden in weiten Grenzen frei wählbar und ist die Position des Längsschlitzes 4, die die räumliche Lage des Greiforganes 6 und eines davon ergriffenen Fördergutes im Anschlussbereich definiert, an jedem Anschluss von der Schlitzposition am Ende des unveränderbaren Förderstreckenbereiches unabhängig und ebenfalls in weiten Grenzen frei wählbar.

Um das distale Ende des variablen Förderstrecken-Endbereiches 2 an den Anschluss A.1 anzuschliessen, muss die bieg- und verdrehbare Führung 3 nur gebogen und nicht verdreht werden, denn der Längsschlitz 4 hat am Ende des fest montierten Führungsbereichs 1 dieselbe räumliche Ausrichtung wie am Anschluss A.1.

Um das distale Ende des variablen Förderstrecken-Endbereiches 2 an den Anschluss A.2 anzuschliessen, muss die bieg- und verdrehbare Führung nicht gebogen aber verdreht werden, denn der Anschluss A.2 ist auf einer geradlinigen Verlängerung des unveränderbaren Führungsbereiches 1 in einer Distanz, die der Länge des bieg- und verdrehbaren Führungsstückes entspricht, angeordnet, hat aber einen Längsschlitz 4, dessen Position gegenüber der Position des Längsschlitzes der fest montierten Führung um ca. 90° versetzt bzw. verdreht ist.

Um das distale Ende des variablen Förderstrecken-Endbereiches 2 an den Anschluss A.3 anzuschliessen, muss die Führung 3 gebogen und um ca. 180° verdreht werden.

Für einen Anschlusswechsel sind antreibbare Anschliessmittel 8 vorgesehen, die sehr schematisch dargestellt sind. Diese Anschliessmittel 8 sind vorteilhafterweise mit dem distalen Ende des variablen Förderstreckenbereichs verbunden und sind derart ausgerüstet, dass sie dieses distale Ende an jeden der Anschlüsse A.1 bis A.3 bewegen können (Doppelpfeile B), dass sie das distale Ende um seine eigene Achse drehen können (Doppelpfeil C) und dass sie das distale Ende in jeder, einem Anschluss entsprechenden gebogenen und/oder verdrehten Position festhalten können. Die Ausgestaltung der Anschliessmittel 8 ist in hohem Masse von der Anordnung und Ausstattung der Anschlüsse A.1 bis A.3 abhängig, kann aber durch einen Fachmann beispielsweise mit einem Hebelsystem und einer Kombination von entsprechend steuerbaren Linearmotoren problemlos realisiert werden.

Bei einer Anwendung der in der Figur 1 dargestellten Gliederkette als Förderorgan 5 muss vor einem Wechsel des Anschlusses dafür gesorgt werden, dass die Kette sich nicht über den Anschlussbereich erstreckt. Ihr Kopfende muss also vor dem Wechsel mindestens in das bieg- und verdrehbare Führungsstück zurückgezogen werden oder die Kettenglieder müssen vor dem Wechsel im Anschlussbereich voneinander getrennt werden.

In der Publikation DE-19604999 (F406) ist ein System beschrieben, das eine Führung, wie sie in der Figur 1 dargestellt ist, und ein Förderorgan in Form einer Kette, die in allen Richtungen biegbar und im Zug- und Stossbetrieb einsetzbar ist, beschrieben. In einem derartigen System könnte das in der Figur 1 dargestellte, distale Ende einer Förderstrecke als Weichenfunktion integriert werden.

In einer Führung 3, wie sie in der Figur 1 dargestellt ist, können auch voneinander unabhängige Förderelemente bewegt werden, beispielsweise Elemente, wie sie in der Patentanmeldung CH-2338/96 (F441) beschrieben sind.

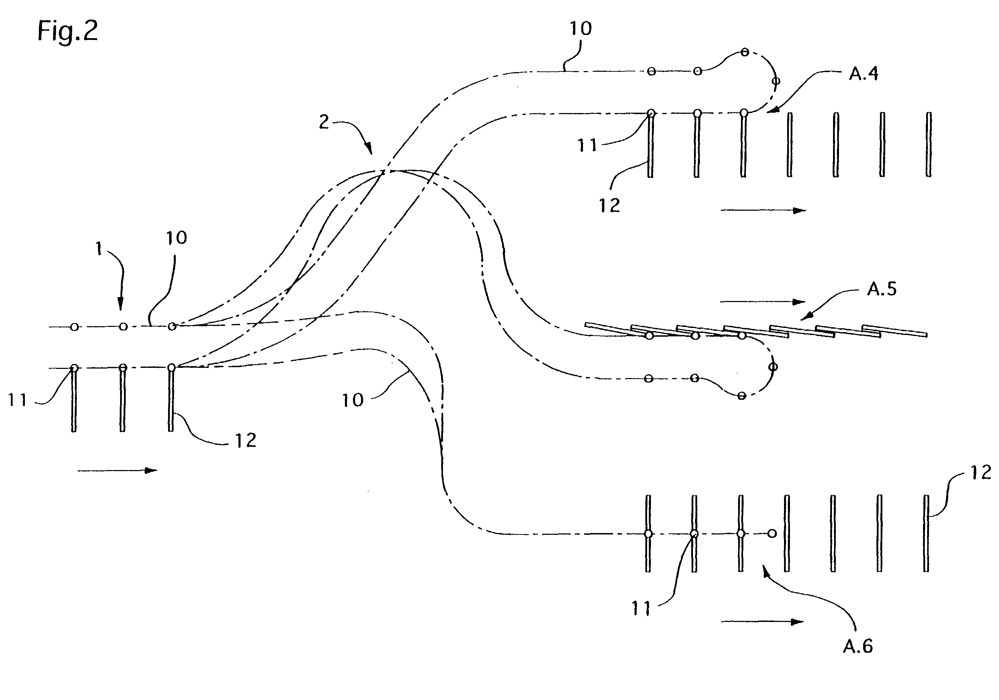

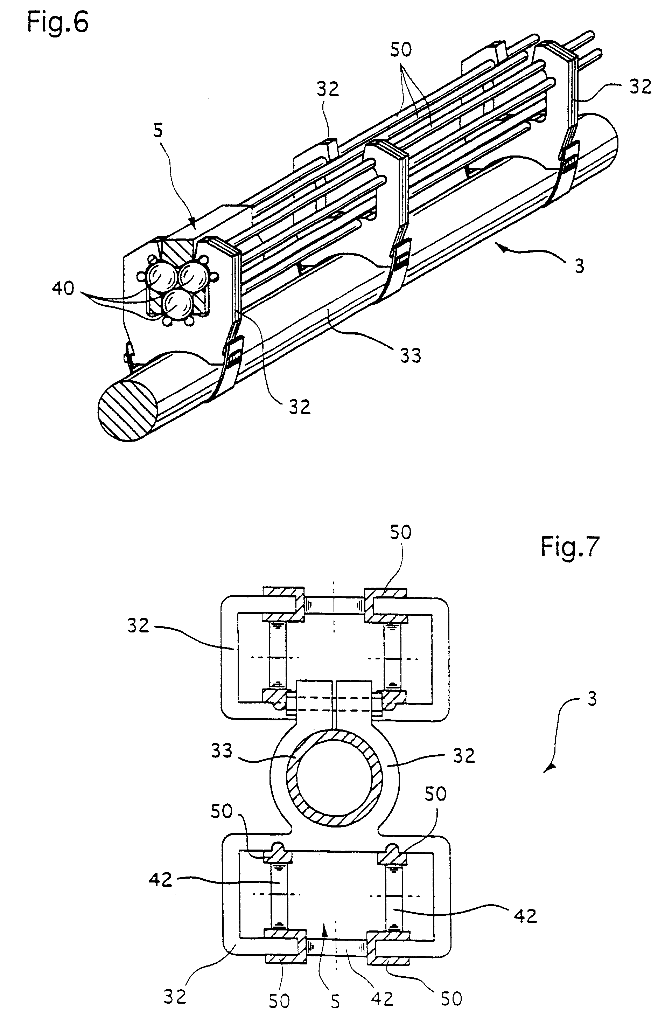

**Figur 2** stellt eine weitere, beispielhafte Ausrührungsform des erfindungsgemässen Fördersystems dar. In dieser Ausführungsform sind insbesondere Anschlüsse an andere Födersysteme oder an andere Einrichtungen vorgesehen, an die nur das Fördergut, nicht aber das Förderorgan übergeben wird. Es ist wiederum nur ein Ende der Förderstrecke mit einem unveränderbaren Förderstreckenbereich 1 und einem variablen Förderstrecken-Endbereich 2 dargestellt. Das Fördersystem weist eine nicht dargestellte Doppelführung (z.B. einen Doppelkanal gemäss Figur 7) auf, die einerseits den fördernden Teil einer endlosen Gliederkette 10 (schematisch dargestellt als strichpunktierte Linie) und andererseits das Retourtrum derselben Gliederkette entlang der Förderstrecke führt. Das distale Ende des variablen Förderstreckenbereichs stellt also gleichzeitig eine Umlenkung der Gliederkette 10 um ca 180° dar.

Das Fördergut wird beispielsweise von an den Kettengliedern angeordneten und aus dem Führungskanal ragenden Greifern 11 ergriffen und während der Förderung gehalten. Die Greifer 11 sind in der Figur 2 nur bereichsweise als kleine Kreise dargestellt und das Fördergut, das aus einzelnen Gegenständen 12 besteht, als schmale Rechtecke, die beispielsweise parallel zu ihren Hauptflächen betrachtete Druckprodukte darstellen.

Bei einem Anschluss an ein derartiges Fördersystem wird das Fördergut vom Transportorgan bzw. vom Greifer 11 abgegeben an ein weiteres Förderorgan eines weiteren Fördersystems oder an eine andere Einrichtung (nicht dargestellt) übergeben, das heisst der Anschluss an das Fördersystem ist funktionell immer mit einer Übergabe des Fördergutes verbunden.

In der Figur 2 sind schematisch drei Anschlüsse A.4 bis A.6 dargestellt, wobei die das Fördergut übernehmenden, weiteren Förderorgane oder anderen Einrichtungen nicht dargestellt und dadurch auch nicht weiter definiert sind. Es ist aber aus der Figur 2 ersichtlich, dass die drei Anschlüsse verschiedene Anforderungen an die räumliche Lage der geförderten Gegenstände 12 stellen und aus diesem Grunde diese Gegenstände je nach Anschluss in verschiedener räumlicher Lage übergeben werden müssen.

Am Ende der fest montierten Führung (Förderstreckenbereich 1) werden die geförderten Gegenstände 12 beispielsweise hängend gefördert, das heisst, das Fördertrum ist beispielsweise unterhalb des Retourtrums angeordnet. Diese Anordnung ist auch eine Bedingung für den Anschluss A.4. Um an diesen anzuschliessen muss die Führung also nur entsprechend gebogen, nicht aber verdreht werden. Am Anschluss A.5 sollen die Gegenstände im wesentlichen liegend übergeben werden, das heisst das Retourtrum soll unterhalb des Fördertrums liegen. Die reversibel bieg- und verdrehbare Führung des variablen Förderstreckenbereichs 2 muss also für eine Übergabe an Anschluss A.5 nicht nur gebogen sondern auch um 180° verdreht werden. Für eine Übergabe an Anschluss A.6 muss die bieg- und verdrehbare Führung gebogen und um 90° verdreht werden.

Auch für die Ausführungsform gemäss Figur 2 gilt, dass der variable Förderstreckenbereich 2 auch Schlaufen- oder Looping-förmig angeordnet werden kann. Bei einem relativ grosse Biegeradius ist es mit Hilfe einer Schlaufe trotzdem möglich, relativ nahe am unveränderbaren Fördferstreckenbereich liegende Anschlüsse zu bedienen.

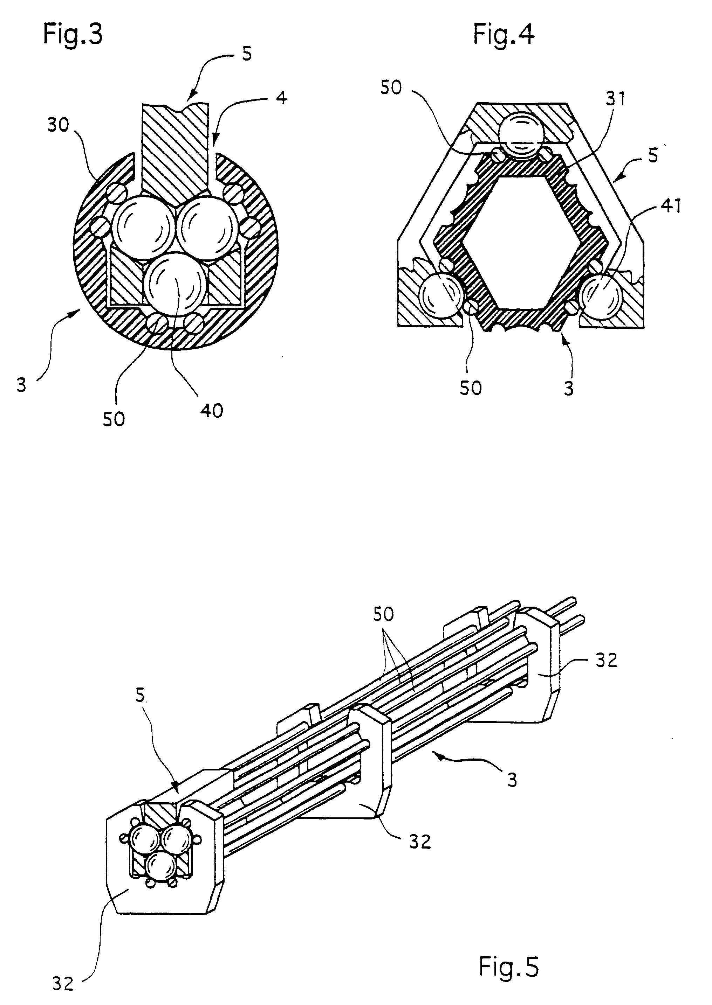

**Figuren 3 bis 7** stellen mehr im Detail beispielhafte Ausrührungsformen von reversibel bieg- und verdrehbaren Führungen 3 dar, die für ein erfindungsgemässes Fördersystem anwendbar sind.

**Figur 3** zeigt als Querschnitt eine Führung 3 und ein Förderorgan 5 eines Fördersystems, wie es in der Publikation EP-387318 (F270) und in der Patentanmeldung CH-2917/96 (F444) beschrieben ist. Die Führung 3 besteht im wesentlichen aus einem Führungskanal 30, der wie der Führungskanal der Figur 1 einen Längsschlitz 4 aufweist. Zur Führung des innenlaufenden Förderorgans 5, das als Rollkörper Dreiergruppen von Kugeln 40 aufweist, sind im Führungskanal 30 Schienen 50 angeordnet, die beispielsweise durch Formschluss an der Innenoberfläche des Führungskanals befestigt sind. Diese Schienen erstrecken sich parallel zueinander über die ganze Länge des Kanals 30, sind vorteilhafterweise aus einem abriebfesten Material, beispielsweise aus einem geeigneten Metall, gefertigt und haben beispielsweise einen runden Querschnitt.

Damit der Führungskanal 30 mit den Schienen 50 für die Anwendung in einem variablen Förderstreckenbereich reversibel bieg- und verdrehbar ist, muss er aus einem reversibel deformierbaren, vorteilhafterweise elastisch deformierbaren Material bestehen und müssen die Schienen 50 mindestens beschränkt in der Richtung der Förderstrecke, also parallel zur Kanalachse verschiebbar sein. Auch die Schienen 50 müssen biegbar sein. Wenn sie einen runden Querschnitt haben, müssen sie nicht unbedingt verdrehbar sein, sofern ihre Befestigung im Kanal 30 eine Drehung relativ zum Kanal erlaubt.

**Figur 4** zeigt eine weitere Ausführungsform einer Führung 3 für ein erfindungsgemässes Fördersystem. Diese dient zur Führung eines aussen laufenden Förderorgans 5. Die Führung weist einen reversibel bieg- und verdrehbaren Führungsstab 31 auf, der innen hohl sein kann. Auf der Aussenseite des Führungsstabes 31 sind Schienen 50 angeordnet, auf denen Rollkörper 41 des Förderorgans 5 abrollen. Für den Führungsstab 31 und die Schienen 50 gilt dasselbe, was bereits im Zusammenhang mit der Figur 3 über den Führungskanal 30 und die Schienen 50 ausgesagt wurde.

**Figur 5** zeigt eine weitere Führung 3, die in ihrer Funktion dem Führungskanal der Figur 3 entspricht. Der reversibel bieg- und verdrehbare Kanal 30 ist dabei aber ersetzt durch eine Mehrzahl von voneinander beabstandeten Kanalelementen 32, die durch die Biegbarkeit der Schienen 50 gegeneinander verschiebbar sind und dadurch einen reversibel bieg- und verdrehbaren Kanal bilden, ohne selbst bieg- oder verdrehbar sein zu müssen.

**Figur 6** zeigt eine weitere Führung 3, die wiederum in ihrer Funktion dem Führungskanal der Figur 3 entspricht, und die, wie der Führungskanal der Figur 5 Kanalelemente 32 aufweist. Dabei sind die Kanalelemente 32 auf einem reversibel bieg- und verdrehbaren Tragelement 33 montiert. Es ist ohne weiteres möglich, auf dem Tragelement 33 einen zweiten Kanal bestehend aus Schienen 50 und Kanalelementen 32 zu montieren und den "Doppelkanal" in einem System gemäss Figur 2 einzusetzen.

Selbstverständlich ist es auch für Führungen in der Form von Führungsstäben (Figur 4) möglich, den Führungsstab durch Stabelemente (analog zu den Kanalelementen 32) zu ersetzen, welche Stabelemente durch Schienen miteinander zu einer reversibel bieg- und verdrehbaren Führung kombiniert sind.

**Figur 7** zeigt eine weitere Führung 3 in Form eines doppelten Führungskanals, der einsetzbar ist in einem System gemäss Figur 2. Die Führung besteht wiederum aus einem reversibel bieg- und verdrehbaren Tragelement 33 und aus zwei darauf montierten Führungskanälen, bestehend aus Kanalelementen 32 und Schienen 50. Als Transportorgan 5 dient beispielsweise eine Gliederkette die mit Rollen 42 auf den Schienen 50 abrollt.

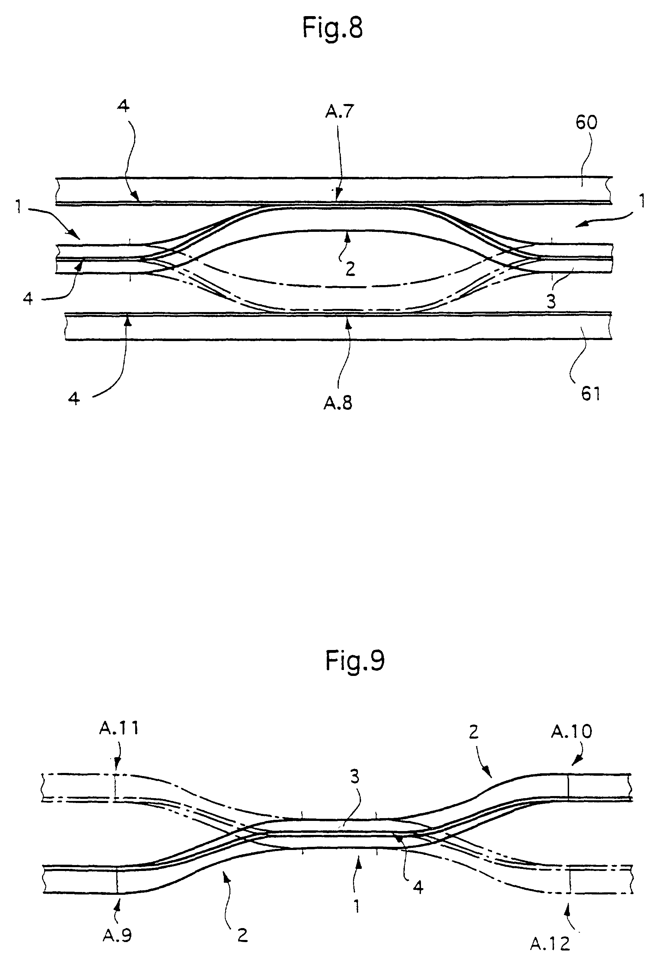

**Figur 8** zeigt eine beispielhafte Ausführungsform des erfindungsgemässen Fördersystems mit einem variablen Förderstrecken-Mittelbereich 2, der beidseitig an unveränderbare Förderstreckenbereiche 1 anschliesst. Die Führung 3 ist als Führungskanal mit Längsschlitz 4 dargestellt. Je nach Position des variablen Förderstreckenbereichs 2 wird dieser für Übergaben an Anschlüssen A.7 bzw. A.8 an eine von zwei weiteren Förderstrecken 60 bzw. 61 angeschlossen, wobei die Position des Längsschlitzes 4 beispielsweise an die Position eines gleichen Längsschlitzes der Führungen der Fördersysteme 60 und 61 in der angedeuteten Weise durch Verdrehung der Führung 3 anzupassen ist.

**Figur 9** zeigt eine weitere beispielhafte Ausführungsform des erfindungsgemässen Fördersystems, die sich aus der Ausführungsform gemäss Figur 1 ableiten lässt. Die Förderstrecke weist einen mittleren, unveränderbaren Bereich 1 und daran beidseitig anschliessend je einen variablen Bereich 2 auf. Die entsprechenden Führungen 3 sind wiederum als Führungskanäle mit Längsschlitz 4 dargestellt und die Anschlüsse A.9 bis A.12 als distale Enden gleicher Führungen. Durch wahlweisen Anschluss des einen variablen Förderstreckenbereichs 2 an die Anschlüsse A.9 oder A.11 und des anderen variablen Förderstreckenbereichs 2 an die Anschlüsse A.10 oder A.12 sind vier verschiedene Anschlussvarianten (A.9-A.10: ausgezogen dargestellt; A.11-A.12: strichpunktiert dargestellt; A.9-A.12 und A.11-A.10: nicht dargestellt) möglich.

Die in den Figuren dargestellten Ausführungsformen des erfindungsgemässen Fördersystems sind Beispiele und sollen die Erfindung nicht limitieren. Andere als die dargestellten Kombinationen von Merkmalen sind einfach aus der Beschreibung und aus den Figuren ableitbar und ergeben weitere, mögliche Ausführungsformen des erfindungsgemässen Fördersystems.

## Patentansprüche

1. Fördersystem zum Fördern entlang einer Förderstrecke (1, 2), welches Fördersystem eine Führung (3), die sich entlang der Förderstrecke erstreckt, und mindestens ein Förderorgan (5), das durch die Führung geführt und durch einen geeigneten Antrieb angetrieben entlang der Förderstrecke bewegbar ist, aufweist, wobei Führung und Förderorgan für eine von der Schwerkraft im wesentlichen unabhängige Förderung eines Fördergutes ausgestaltet sind, **dadurch gekennzeichnet, dass** das Fördersystem mindestens einen unveränderbaren Förderstreckenbereich (1) mit starr montierter Führung und mindestens einen an einen unveränderbaren Förderstreckenbereich (1) anschliessenden, variablen Förderstreckenbereich (2) mit reversibel bieg- und verdrehbarer Führung (3) aufweist und dass zum wahlweisen Anschliessen des variablen Förderstreckenbereichs (2) an einen Anschluss aus einer Mehrzahl von Anschlüssen (A.1-A.3, A.4-A.6, A.7-A.8, A.9-A.12) antreibbare Anschliessmittel (8) zum gezielten Biegen und/oder Verdrehen der reversibel bieg- und verdrehbaren Führung (3) des variablen Förderstreckenbereichs (2) vorgesehen sind.

2. Fördersystem nach Anspruch 1, **dadurch gekennzeichnet, dass** die Biegbarkeit und die Verdrehbarkeit der Führung (3) des variablen Förderstreckenbereichs (2) derart ausgelegt ist, dass die bei einer Biegung und/oder Verdrehung zu erreichenden Krümmungsradien der Förderstrecke auf die Fördereigenschaften des mindestens einen Förderorgans (5) abgestimmt sind.

3. Fördersystem nach einem der Ansprüche 1 oder 2, **dadurch gekennzeichnet, dass** die bieg- und verdrehbare Führung (3) des variablen Förderstreckenbereichs (2) in ihrem angeschlossenen Zustand in ihren Endbereichen fixiert und sonst selbsttragend ist.

4. Fördersystem nach einem der Ansprüche 1 bis 3, **dadurch gekennzeichnet, dass** die Führung (3) mindestens im variablen Förderstreckenbereich (2) ein reversibel bieg- und verdrehbarer Führungskanal (30) mit einem Längsschlitz ist.

5. Fördersystem nach einem der Ansprüche 1 bis 3, **dadurch gekennzeichnet, dass** die Führung (3) mindestens im variablen Förderstreckenbereich (2) ein reversibel bieg- und verdrehbarer Führungsstab (31) ist.

6. Fördersystem nach einem der Ansprüche 4 oder 5, **dadurch gekennzeichnet, dass** die Führung (3) zusätzlich eine Mehrzahl von zueinander parallel verlaufenden Schienen (50) aufweist, die relativ zum Führungskanal (30) oder zum Führungsstab (31) in Richtung der Förderstrecke mindestens beschränkt verschiebbar sind.

7. Fördersystem nach Anspruch 6, **dadurch gekennzeichnet, dass** als Führungskanal oder Führungsstab eine Mehrzahl von voneinander beabstandeten Kanalelementen (32) oder Stabelementen vorgesehen ist.

8. Fördersystem nach einem der Ansprüche 5 bis 7, **dadurch gekennzeichnet, dass** die reversibel bieg- und verdrehbare Führung (3) ein reversibel bieg- und verdrehbares Tragelement (33) aufweist, auf dem ein Führungskanal oder Führungsstab montiert ist.

9. Fördersystem nach einem der Ansprüche 1 bis 8, **dadurch gekennzeichnet, dass** der variable Förderstreckenbereich (2) ein Förderstrecken-Endbereich ist und sein distales Ende an ein gleiches Fördersystem anschliessbar ist, derart, dass das mindestens eine Förderorgan (5) über den Anschlussbereich bewegbar ist.

10. Fördersystem nach Anspruch 8, **dadurch gekennzeichnet, dass** auf dem reversibel bieg- und verdrehbaren Tragelement (33) zwei Führungskanäle oder Führungsstäbe montiert sind und dass an einem distalen Ende des variablen Förderstreckenbereichs (2) eine Führungskanalumlenkung oder eine Führungsstabumlenkung vorgesehen ist.

11. Fördersystem nach Anspruch 10, **dadurch gekennzeichnet, dass** der variable Förderstreckenbereich (2) ein Förderstrecken-Endbereich ist und sein distales Ende an ein anderes oder gleiches Fördersystem oder an eine andere Einrichtung anschliessbar ist.

12. Fördersystem nach einem der Ansprüche 1 bis 9, **dadurch gekennzeichnet, dass** der variable Förderstreckenbereich (2) ein mittlerer Förderstreckenbereich ist, der beidseitig an unveränderbare Förderstreckenbereiche (1) anschliesst.

## Claims

1. Conveying system for conveyance along a conveying line (1, 2), which conveying system comprises guide means (3) extending along the conveying line and at least one conveying element (5) being movable along the conveying line guided by the guide means and driven by a suitable drive, wherein guide means and conveying element are designed for conveyance of items substantially independent of gravity, **characterized in that** the conveying line comprises at least one invariable conveying line region (1) with fixedly mounted guide means and connected to an end of the invariable conveying line region (1) at least one variable conveying line region (2) with reversibly bendable and twistable guide means (3) and that for selective connection of the variable conveying line region (2) to one of a plurality of connecting points (A.1 - A.3, A.4 - A.6, A.7 - A.8, A.9 - A.12) driven connecting means (8) are provided for selectively bending and/or twisting the reversibly bendable and twistable guide means (3) of the variable conveying line region (2).

2. Conveying system according to claim 1, **characterized in that** bendability and twistability of the guide means (3) of the variable conveying line region (2) is designed such that on bending and/or twisting the bending radii of the conveying line are matched to conveying properties of the at least one conveying element (5).

3. Conveying system according to one of claims 1 or 2, **characterized in that** the bendable and twistable guide means (3) of the variable conveying line region (2) in a connected condition is fixed in its end regions and is self-supporting.

4. Conveying system according to one of claims 1 to 3, **characterized in that** the guide means (3) is, at least in the variable conveying line region (2), a reversibly bendable and twistable guide channel (30) with a longitudinal slot (4).

5. Conveying system according to one of claims 1 to 3, **characterized in that** the guide means (3), at least in the variable conveying line region (2), is a reversibly bendable and twistable guide rod (31).

6. Conveying system according to one of claims 4 to 5, **characterized in that** the guide means (3) additionally comprises a plurality of rails (50) running in parallel to each other and being at least to a limited degree movable in the direction of the conveying line relative to the guide channel (30) or the guide rod (31).

7. Conveying system according to claim 6, **characterized in that** the guide channel or guide rod is formed by a plurality of distanced channel elements (32) or rod elements.

8. Conveying system according to one of claims 5 to 7, **characterized in that** the reversibly bendable and twistable guide means (3) comprises a reversibly bendable and twistable carrier element (33) on which a guide channel or a guide rod is mounted.

9. Conveying system according to one of claims 1 to 8, **characterized in that** the variable conveying line region (2) is a conveying line end region and its distal end is connectable to a similar conveying system in a manner that the at least one conveying element (5) is movable across the connecting point.

10. Conveying system according to claim 8, **characterized in that** on the reversibly bendable and twistable carrier element (33) two guide channels or guide rods are mounted and that on one distal end of the variable conveying line region (2) the guide channel or the guide rod changes direction.

11. Conveying system according to claim 10, **characterized in that** the variable conveying line region (2) is a conveying line end region and its end is connectable to a different or similar conveying system or connectable to a different installation.

12. Conveying system according to one of claims 1 to 9, **characterized in that** the variable conveying line region (2) is an intermediate conveying line region connected to invariable conveying line regions (1) on both sides.

## Revendications

1. Système convoyeur pour transporter le long d'une voie de transport (1, 2), lequel système convoyeur comporte un guide (3) qui s'étend le long de la voie de transport et au moins un organe transporteur (5) qui est guidé par le guide et qui est mobile, entraîné par un entraînement approprié, le long de la voie de transport, le guide et l'organe transporteur étant conçus pour un transport de matières à transporter globalement indépendant de la force de gravité, **caractérisé en ce que** le système convoyeur comporte au moins une zone de voie de transport invariable (1) avec un guide monté fixe et au moins une zone de voie de transport variable (2) qui est raccordée à la suite d'une zone de voie de transport invariable (1) et qui comporte un guide (3) pouvant être plié et tordu de façon réversible et **en ce que**, pour le raccordement sélectif de la zone de voie de transport variable (2) à un raccord parmi plusieurs raccords (A.1 à A.3, A.4 à A.6, A.7 à A.8, A.9 à A.12), des moyens de raccordement entraînables (8) sont prévus pour le pliage et/ou la torsion recherchés du guide (3), pouvant être plié et tordu de façon réversible, de la zone de voie de transport variable (2).

2. Système convoyeur selon la revendication 1, **caractérisé en ce que** la possibilité de plier et de tordre le guide (3) de la zone de voie de transport variable (2) est telle que les rayons de courbure de la voie de transport à atteindre lors d'un pliage et/ou d'une torsion sont adaptés aux propriétés de transport du ou des organes transporteurs (5).

3. Système convoyeur selon l'une des revendications 1 ou 2, **caractérisé en ce que** le guide pouvant être plié et tordu (3) de la zone de voie de transport variable (2) est, à l'état raccordé, fixé à ses extrémités et sinon autoporteur.

4. Système convoyeur selon l'une des revendications 1 à 3, **caractérisé en ce que** le guide (3) est, au moins dans la zone de voie de transport variable (2), un canal de guidage (30) pouvant être plié et tordu de façon réversible et comportant une fente longitudinale.

5. Système de transport selon l'une des revendications 1 à 3, **caractérisé en ce que** le guide (3) est, au moins dans la zone de voie de transport variable (2), une barre de guidage (31) pouvant être pliée et tordue de façon réversible.

6. Système convoyeur selon l'une des revendications 4 ou 5, **caractérisé en ce que** le guide (3) comporte en plus plusieurs rails (50) qui s'étendent parallèlement les uns aux autres et qui sont déplaçables au moins de façon limitée dans la direction de la voie de transport par rapport au canal de guidage (30) ou à la barre de guidage (31).

7. Système convoyeur selon la revendication 6, **caractérisé en ce qu'**il est prévu comme canal de guidage ou comme barre de guidage plusieurs éléments de canal (32) ou éléments de barre distants les uns des autres.

8. Système convoyeur selon l'une des revendications 5 à 7, **caractérisé en ce que** le guide pouvant être plié et tordu de façon réversible (3) comporte un élément porteur pouvant être plié et tordu de façon réversible (33) sur lequel un canal de guidage ou une barre de guidage est monté.

9. Système convoyeur selon l'une des revendications 1 à 8, **caractérisé en ce que** la zone de voie de transport variable (2) est une zone terminale de voie de transport et son extrémité distale est raccordable à un système convoyeur identique de telle sorte que le ou les organes transporteurs (5) sont mobiles dans la zone de raccordement.

10. Système convoyeur selon la revendication 8, **caractérisé en ce que** deux canaux de guidage ou barres de guidage sont montés sur l'élément porteur pouvant être plié et tordu de façon réversible (33) et **en ce qu'**un renvoi de canal de guidage ou un renvoi de barre de guidage est prévu à une extrémité distale de la zone de voie de transport variable (2).

11. Système convoyeur selon la revendication 10, **caractérisé en ce que** la zone de voie de transport variable (2) est une zone terminale de voie de transport et son extrémité distale est raccordable à un autre système convoyeur ou à un système convoyeur identique ou à un autre dispositif.

12. Système convoyeur selon l'une des revendications 1 à 9, **caractérisé en ce que** la zone de voie de transport variable (2) est une zone médiane de voie de transport qui est raccordée des deux côtés à une zone de voie de transport invariable (1).
